# EUROPÄISCHE PATENTSCHRIFT

(11) **EP 0 894 179 B1**
(45) Veröffentlichungstag und Bekanntmachung des Hinweises auf die Patenterteilung: **10.10.2001**
(21) Anmeldenummer: 97920627.3
(22) Anmeldetag: 09.04.1997
(51) Int. Cl.: E06B 1/60

(54) **JUSTIERVORRICHTUNG FÜR IN EINE GEBÄUDEÖFFNUNG EINSETZBARE BAUKÖRPER, WIE Z.B. FENSTER- ODER TÜRRAHMEN**
ADJUSTING DEVICE FOR A COMPONENT, E.G. A WINDOW OR DOOR FRAME, TO BE FITTED IN AN APERTURE IN A BUILDING
DISPOSITIF D'AJUSTAGE POUR ELEMENT DE CONSTRUCTION A INSERER DANS UNE OUVERTURE DE BATIMENT, TEL QUE CADRE DE FENETRE OU DE PORTE

(30) Priorität: 25.04.1996 DE 19616533
(43) Veröffentlichungstag der Anmeldung: 03.02.1999
(73) Patentinhaber: SFS Industrie Holding AG, 9435 Heerbrugg (CH)
(72) Erfinder: HASLER, Guido, CH-9437 Marbach (CH); STEFFEN, Markus, CH-9472 Grabs (CH); ÖSTERLE, Helmut, A-6800 Feldkirch (AT); EXENBERGER, Thomas, CH-9434 Au (CH)
(74) Vertreter: Ludescher, Hans
(86) Internationale Anmeldenummer: EP9701746
(87) Internationale Veröffentlichungsnummer: WO9741325

(56) Entgegenhaltungen:
- EP-A- 0 196 485
- DE-A- 2 521 555
- DE-A- 4 237 019
- FR-A- 1 008 781
- FR-A- 1 316 651
- FR-A- 1 479 490
- GB-A- 1 244 498
- GB-A- 2 123 513
- US-A- 2 015 159
- US-A- 2 191 771
- US-A- 3 665 801

## Beschreibung

Die Erfindung betrifft eine Justiervorrichtung bestehend aus einer Spannhülse und einem Bolzen für in eine Gebäudeöffnung einsetzbare Baukörper, wie z.B. Fenster- oder Türrahmen, wobei die Spannhülse als eine mittels Gewindeeingriff gegenüber dem Baukörper verstellbare, an einer Begrenzung einer Gebäudeöffnung abstützbare Spannhülse vorgesehen ist, welche eine über deren ganze Länge durchgehende, mittige Bohrung aufweist, wobei in die mittige Bohrung in der Spannhülse der Bolzen als ein in eine Begrenzung der Gebäudeöffnung eindrehbarer Bolzen einsetzbar ist.

Es sind bereits viele Ausführungen von Justiervorrichtungen bekannt geworden, welche in der Regel zwischen die Außenbegrenzung eines Baukörpers und die Begrenzungen einer Gebäudeöffnung eingesetzt werden. Dabei ist es durch entsprechende Verstellschrauben möglich, einen mehr oder weniger großen Anpreßdruck zu erzielen, wobei eine exakte Lagefixierung beispielsweise in einer vertikalen oder horizontalen Ausrichtung des Baukörpers jedoch praktisch unmöglich ist. Wenn vor dem endgültigen Fixieren (z.B. durch Ausschäumen, Verputzen usw.) Nachstellarbeiten erforderlich sind, müssen die Justiervorrichtungen auf einer Seite gelöst werden, damit der Baukörper durch Nachspannen der Justiervorrichtungen auf der gegenüberliegenden Seite in der Gebäudeöffnung verschoben werden kann. Damit ist die Gefahr gegeben, daß sich andere Einstellungen verschieben und somit eine komplette Neujustierung notwendig wird.

Bei der durch die GB-A-2 123 513 bekannten Konstruktion ist eine Justiervorrichtung mit einer Spannhülse und einem in eine mittige Bohrung einsetzbaren Bolzen vorgesehen, wobei der Bolzen als mit einem Gewinde versehene Schraube ausgebildet ist. Bei einem Untergrund aus Holz ist diese Schraube nach Art einer Holzschraube ausgebildet und bei einem Untergrund aus Metall ist eine Gewindebohrung herzustellen. Eine endgültige Fixierung erfolgt mit einem solchen als Schraube ausgebildeten Bolzen.

Die vorliegende Erfindung hat sich zur Aufgabe gestellt eine Justiervorrichtung zu schaffen, bei welcher eine einfache Verstellmöglichkeit in einer Richtung, also z.B. in horizontaler Richtung, möglich ist, ohne daß es dabei zu ungewollten Verstellungen in vertikaler Richtung kommt.

Bei der vorliegenden Erfindung gelingt dies dadurch, daß der Bolzen mit einem Werkzeugangriff, mit einem Bohrabschnitt und einem gewindefreien Schaft ausgebildet ist.

Die in die Spannhülsen einsetzbaren und in die Begrenzung der Gebäudeöffnung eindrehbaren Bolzen übernehmen somit eine Tragfunktion für den einzusetzenden Baukörper, wobei eine beliebige Verstellung desselben in Achsrichtung der Bolzen ermöglicht wird. Die Bolzen bilden daher keinen Verstellteil, sondern lediglich eine entsprechende Führung, entlang welcher der Baukörper durch Verstellen einer Spannhülse bewegt werden kann. Auch bei notwendigen größeren Verstellwegen ergeben sich dann keinerlei Probleme, da der Bolzen axial beweglich im Bohrloch sitzt. Somit ist allein durch Verdrehen der Spannhülsen eine Justierung, welche in Achsrichtung und unter entsprechender Führung an dem Bolzen bzw. an den Bolzen erfolgt, möglich.

Im Gegensatz zu bekannten Ausführungen, wo eine Schraube mit einem Gewindeschaft gegebenenfalls mit der Notwendigkeit der Verwendung eines Dübels eingesetzt wird, ergeben sich gemäß der vorliegenden Erfindung wesentliche Vorteile.

Der erfindungsgemäß vorzusehende Bolzen muß keinerlei Befestigungsfunktion in dessen Achsrichtung übernehmen, dient also nicht zur Befestigung ähnlich einer Schraube oder einer in einen Dübel einzusetzenden Schraube und kann daher besonders vorteilhafte Ausgestaltungen aufweisen.

Durch die besondere Ausführung kann der Bolzen beispielsweise mit einem Bohrhammer eingetrieben werden, wobei sich der Bolzen das Aufnahmeloch selbst herstellt.

Die konstruktiv einfache Ausgestaltung des Bolzens ist deshalb möglich, weil der Bolzen an sich keine Belastung in dessen Achsrichtung aufnehmen muß, sondern lediglich zur Fixierung quer zu dessen Achsrichtung dient. Zur Gewährleistung einer Verliersicherung und zur Verhinderung eines ungewollten Lösens des Bolzens beispielsweise bei Erschütterungen, wird vorgeschlagen, daß der Bolzen an dem an den Bohrabschnitt anschließenden Schaftabschnitt mit Aufrauhungen, einer Rändelung oder dergleichen versehen ist. Damit wird eine sozusagen provisorische Halterung erreicht, so daß der Bolzen mit einer ausreichenden Reibung in seiner Stellung gehalten wird.

Eine konstruktiv einfache Ausgestaltung des bei der vorliegenden Erfindung vorgesehenen Bolzens liegt darin, daß der Bolzen axial verschiebbar passend zu der Bohrung in der Spannhülse ausgebildet ist. Dadurch wird eine sehr einfache Justiermöglichkeit geschaffen, obwohl sich der Bolzen bereits in seiner Einsatzposition befindet, d.h. eine entsprechende Fixierung des einzusetzenden Baukörpers in der Gebäudeöffnung in Richtung quer zum Bolzen schon erfolgt ist.

Weitere Ausgestaltungsmerkmale und besondere Vorteile werden in der nachstehenden Beschreibung anhand der Zeichnungen noch näher erläutert: Es zeigen:
- Fig. 1: einen Horizontalschnitt durch einen in eine Gebäudeöffnung einsetzbaren, als Fensteroder Türrahmen ausgebildeten Baukörper mit einer entsprechenden Justiervorrichtung;
- Fig. 2: eine im wesentlichen gleiche Ausführung wie Fig. 1, wobei zusätzlich ein federnder Einlegeteil vorgesehen ist;
- Fig. 3 bis 5: ebenfalls Horizontalschnitte in gleicher Art wie in Fig. 1, wobei jedoch hier ein aus einem Vollmaterial, z.B. aus Holz, bestehender Türrahmen den in eine Gebäudeöffnung einsetzbaren Baukörper bildet.

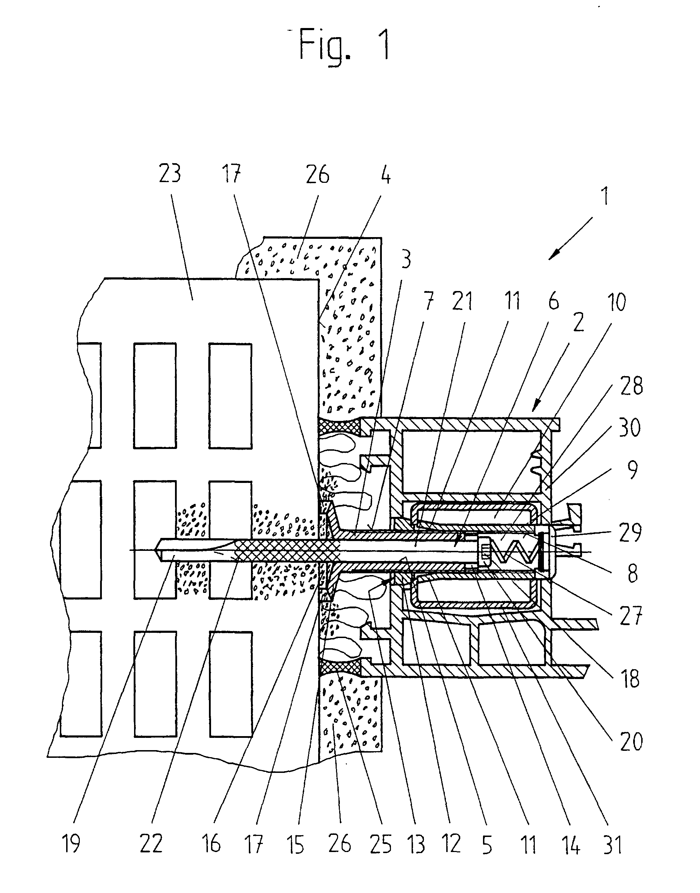

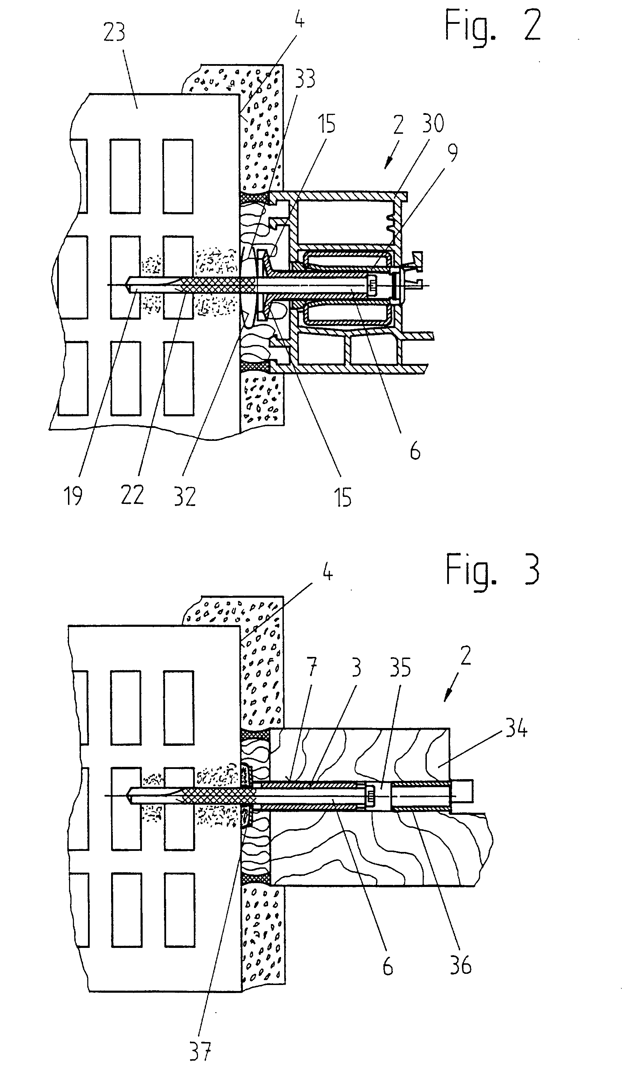

Mit der erfindungsgemäßen Justiervorrichtung soll ein in eine Gebäudeöffnung 1 einsetzbarer Baukörper, welcher in der Ausführung nach den Fig. 1 und 2 als Fenster- oder Türrahmen aus einem Hohlprofil ausgeführt ist, befestigt werden können. Zu diesem Zweck ist eine Spannhülse 3 vorgesehen, welche in einem Gewindeeingriff im Baukörper 2 gehalten ist und sich an einer Begrenzung 4 einer Gebäudeöffnung abstützt. Die Spannhülse 3 weist eine über deren ganze Länge durchgehende, mittige Bohrung 5 auf, wobei in diese mittige Bohrung 5 ein in die Begrenzung 4 der Gebäudeöffnung 1 einschlag- und/oder eindrehbarer Bolzen 6 eingesetzt ist. Die Spannhülse 3 weist ein wenigstens über einen Großteil ihrer Länge geführtes Außengewinde 7 auf, welches in eine Gewindebohrung 8 in dem zu befestigenden Baukörper 2 eingreift. Die Gewindebohrung 8 wird im Ausführungsbeispiel nach den Fig. 1 und 2 von einer Gewindehülse 9 gebildet, welche mit federnd in einen Profilhohlraum 10 des Baukörpers 2 einrastbaren Laschen 11 und mit einem Anschlagbund 12 versehen ist. Es wird also vorerst eine Bohrung durch den Baukörper 2 hergestellt, wobei am rückwärtigen Bereich des Baukörpers 2 eine etwas vergrößerte Bohrung 13 zur Aufnahme des Anschlagbundes 12 vorgesehen ist. Dann kann die Gewindehülse 9 von der Rückseite des Baukörpers 2 eingedrückt werden, bis die Laschen 11 einrasten können. Der Anschlagbund 12 bildet die Gegenhalterung.

Zur Durchführung einer Verstellung der Spannhülse 3 gegenüber der Gewindehülse 9 ist die Spannhülse 3 an ihrem in Einsatzstellung der Begrenzung 4 abgewandten Ende mit einem Werkzeugangriff 18 versehen.

An ihrem in Einsatzstellung der Begrenzung 4 zugewandten Ende weist die Spannhülse 3 einen tellerartigen Abstützteil 15 auf. Dieser Abstützteil 15 ist vorteilhaft einstückig mit der Spannhülse 3 ausgeführt. Natürlich besteht auch die Möglichkeit, zwei Teile vorzusehen, welche auch gegeneinander verdrehbar ausgebildet sein können. Es ist dann gerade bei Verstellarbeiten möglich, daß sich der Abstützteil 15 gegenüber der Begrenzung 4 in der Gebäudeöffnung 1 nicht verdrehen muß, sondern dort in seiner Einsatzstellung verbleiben kann. In einem solchen Falle wird die Verstellbewegung allein durch Verdrehen der getrennt gefertigten Spannhülse 3 bewerkstelligt.

Zweckmäßig ist der Abstützteil 15 der Spannhülse 3 topfförmig ausgebildet. Der rohrartige Rand 16 des topfförmigen Abstützteiles 15 weist dabei zur Schaffung einer günstigeren Abstützmöglichkeit an der Begrenzung 4 zinnenförmige Ausnehmungen 17 auf. Dadurch wird zusätzlich die Möglichkeit geschaffen, bei einem entsprechenden Bohrvorgang mittels des Bolzens 6 das Bohrmaterial abführen zu können.

Der Bolzen 6 ist axial verschiebbar passend zu der Bohrung 5 in der Spannhülse 3 ausgebildet, so daß bei einem Justiervorgang immer ein gleitendes Verschieben möglich ist. Der Bolzen 6 soll ja nur eine Verstellmöglichkeit quer zur Achsrichtung des Bolzens und somit der Spannhülse 3 verhindern. Bei den in den Zeichnungen dargestellten Beispielen ist der Bolzen 6 stets mit einem Werkzeugangriff 18 und mit einem Bohrabschnitt 19 versehen. Vorteilhaft ist ein bei Schrauben üblicher Kopf 20 vorgesehen, welcher den Werkzeugangriff 18 aufweist. Über einen Großteil der Länge des Bolzens 6 ist ein gewindefreier Schaft 21 vorgesehen. Zweckmäßigerweise wird der an den Bohrabschnitt 19 anschließende Schaftabschnitt mit einer Rändelung 22 versehen. Zur Verbesserung des Reibschlusses des Bolzens 6 gegenüber der die Wandöffnung 1 begrenzenden Mauer 23 können hier aber auch Aufrauhungen, Rippen, Riefen, Gewindeteile oder dergleichen vorgesehen werden.

Bei den gezeigten Ausführungsbeispielen ist jeweils ein Bohrabschnitt 19 vorgesehen, so daß der Bolzen 6 mit einer Art Bohrhammer oder einer Bohrmaschine in den Untergrund, hier in die Mauer 23, eingedreht werden kann und sich dabei das Loch selbst herstellt.

Nach dem definitiven Justieren des in die Wandöffnung 1 einzusetzenden Baukörpers 2 erfolgt die endgültige Befestigung desselben. Zu diesem Zweck kann der zwischen dem Baukörper 2 und der Begrenzung 4 gebildete freie Raum mit einer Isolierung versehen oder aber ausgeschäumt werden. Dabei ist es auch denkbar, entsprechende Dichtstreifen 25 einzubringen. Beim gezeigten Beispiel wird anschließend an den Baukörper 2 beidseitig auf die Begrenzung 4 eine Verputzschicht 26 aufgetragen.

Damit der Bolzen 6 in seiner Stellung verbleibt und sich auch nicht durch Erschütterung löst oder Geräusche hervorruft, kann eine Feder 27 vorgesehen werden, welche zwischen dem Kopf 20 des Bolzens 6 und einem die Bohrung 28 abschließenden Pfropfen 29 eingesetzt ist.

Bei der Ausführung nach den Fig. 1 und 2 ist ein Baukörper 2 gezeigt, welcher aus einem Kunststoff-Hohlprofil 30 mit einer eingesetzten Metalleinlage 31 besteht. Dabei handelt es sich um einen Fenster- oder Türrahmen. Es kann aber auch jede andere Form von Rahmen auf die erfindungsgemäße Art und Weise befestigt werden, also auch entsprechende Rahmen aus Leichtmetallprofilen, aus Stahlprofilen oder aus selbsttragenden Kunststoffprofilen ohne zusätzlichen Einsatz von Metalleinlagen.

Bei der Ausführung nach Fig. 2 ist praktisch die gleiche Konstruktion wie in Fig. 1 gewählt, wobei jedoch zwischen dem Abstützteil 15 und der Begrenzung 4 ein federnd nachgiebiger Einlegeteil 32 eingesetzt ist. Der hier vorgesehene Einlegeteil 32 ist als U-förmiger, mit den Schenkeln 33 quer zur Achsrichtung der Spannhülse 3 ausgerichteter Federkörper ausgebildet. Bei einer solchen Ausgestaltung kann neben der Verstell- und Justiermöglichkeit durch die Spannhülse 3 durch entsprechendes Einpressen oder durch eine Hebelwirkung eines Werkzeuges eine geringfügige weitere Verstellung bis zur endgültigen Justierung vorgenommen werden.

Bei den Ausgestaltungen nach den Fig. 3 bis 5 wird ein Baukörper 2 in Form eines Vollholzprofils 34, also ein entsprechender Fenster- oder Türrahmen aus Holz in einer Wandöffnung befestigt.

Die in Fig. 3 gezeigte Spannhülse 3 ist ebenfalls mit einem Außengewinde 7 versehen und wird unter Herstellung eines Innengewindes in eine vorbereitete Bohrung 35 eingedreht. Die Spannhülse 3 formt sich das Gewinde in dem Vollholzprofil 34 also selbst. Es sind dann in gleicher Weise Justiermöglichkeiten gegeben, und in gleicher Weise ist auch ein entsprechender Bolzen 6 angeordnet. Bei einer derartigen Ausgestaltung ist es ebenfalls möglich, in das der Begrenzung 4 abgewandte Ende der Bohrung 35 eine Hülse 36 einzuschlagen, welche ein Herausfallen bzw. ein gänzliches Herausrütteln des Bolzens 6 verhindert. Bei der in Fig. 3 ersichtlichen Ausführung ist am entsprechenden Ende der Spannhülse 3 ein tellerfederförmig ausgebildeter Einlegeteil 37 vorgesehen, so daß auch hier eine federnde Abstützung stattfinden kann.

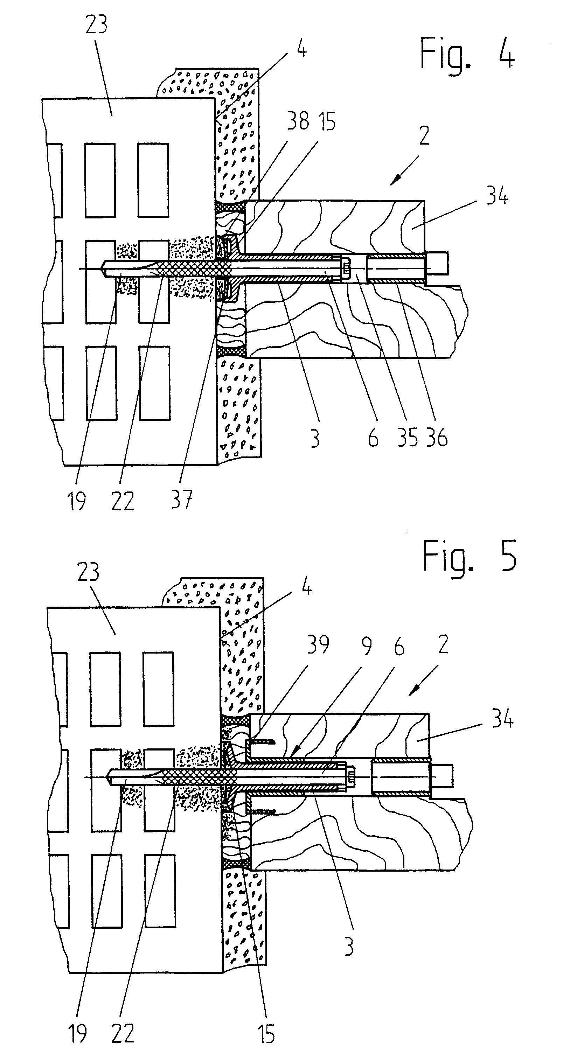

Fig. 4 zeigt eine an sich gleiche Ausführung wie Fig. 3, wobei der Abstützteil 15 hier jedoch topfförmig ausgebildet ist und zusätzlich mit nach innen gerichteten Klauen 38 einen tellerfederförmig ausgebildeten Einlegeteil 37 hält.

Bei der Ausgestaltung nach Fig. 5 ist die Spannhülse 3 samt dem Abstützteil 15 wiederum ähnlich ausgeführt wie bei den Ausgestaltungen nach den Fig. 1 und 2. Hier ist jedoch eine Gewindehülse 9 in Form einer Einschlagmutter 39 vorgesehen. Bei Metallprofilen kann auch eine geeignete Einpreßmutter bzw. eine Einschweißmutter eingesetzt werden.

Im Rahmen der Erfindung ist es möglich, bei Metallprofilen, also auch bei Metall-Hohlprofilen, anstelle des Einsatzes einer Gewindehülse lediglich im Profil selbst ein entsprechendes Gewinde auszubilden, in welches dann die Spannhülse 3 eingedreht werden kann. In diesem Zusammenhang besteht auch die Möglichkeit, besondere Profilformen bzw. Profilgestaltungen auszunützen, wenn z.B. teilweise oder gänzlich umfangsgeschlossen rohrförmige Kanäle in den Profilen vorhanden sind, welche in üblicher Weise zum Einsetzen von Schrauben dienen.

Der Bolzen 6 besteht wohl normalerweise aus Metall, vorzugsweise aus Stahl. Es wäre aber durchaus denkbar, für den Bolzen 6 Kunststoffmaterial einzusetzen, welches gegebenenfalls zusätzlich glasfaserverstärkt ist. Gerade bei einem entsprechenden Untergrund, also bei entsprechender Ausbildung der die Gebäudeöffnung 1 umschließenden Wandung, ist es durchaus denkbar, Bolzen 6 aus Holzstäben, beispielsweise Hartholzstäben, einzusetzen. Dementsprechend wäre es im Rahmen der Erfindung auch möglich, die Spannhülse aus Metall oder aus Kunststoff zu fertigen.

In der vorstehenden Beschreibung wurde stets nur davon gesprochen, daß Baukörper 2, welche beispielsweise als Rahmen oder dergleichen ausgeführt sind, in Gebäudeöffnungen 1 eingesetzt werden sollen. Mit der erfindungsgemäßen Justiervorrichtung können natürlich sämtliche Teile, welche in irgendeiner Weise in einer Wandöffnung justierbar einzusetzen sind, gehalten werden. Die erfindungsgemäße Justiervorrichtung kann auch beim Einbau von Möbeln erfolgreich eingesetzt werden, wenn diese versenkt in Wandöffnungen anzuordnen sind.

Durch die vorliegende Erfindung ist also eine sehr einfache Justiervorrichtung geschaffen worden, welche aus Spannhülsen, die gegenüber dem einzusetzenden Baukörper verstellbar sind, sowie aus eine Haltefunktion ausführenden Bolzen gebildet ist. Sowohl die Montage der Justiervorrichtung als auch die Justierung selbst kann in sehr einfacher und wirkungsvoller Weise durchgeführt werden.

## Patentansprüche

1. Justiervorrichtung bestehend aus einer Spannhülse (3) und einem Bolzen (6) für in eine Gebäudeöffnung (1) einsetzbare Baukörper (2), wie z.B. Fenster- oder Türrahmen, wobei die Spannhülse als eine mittels Gewindeeingriff gegenüber dem Baukörper (2) verstellbare, an einer Begrenzung (4) einer Gebäudeöffnung (1) abstützbare Spannhülse (3) vorgesehen ist, welche eine über deren ganze Länge durchgehende, mittige Bohrung (5) aufweist, wobei in die mittige Bohrung (5) in der Spannhülse (3) der Bolzen als ein in eine Begrenzung (4) der Gebäudeöffnung (1) eindrehbarer Bolzen (6) einsetzbar ist, **dadurch gekennzeichnet, daß** der Bolzen (6) mit einem Werkzeugangriff (18), mit einem Bohrabschnitt (19) und einem gewindefreien Schaft (21) ausgebildet ist.

2. Justiervorrichtung nach Anspruch 1, **dadurch gekennzeichnet, daß** der Bolzen (6) axial verschiebbar passend zu der Bohrung (5) in der Spannhülse (3) ausgebildet ist.

3. Justiervorrichtung nach Anspruch 1 oder 2, **dadurch gekennzeichnet, daß** der Bolzen (6) an dem an den Bohrabschnitt (19) anschließenden Schaftabschnitt zur Erhöhung der Reibung im Bohrloch mit Aufrauhungen, einer Rändelung (22) oder dergleichen versehen ist.

## Claims

1. An adjusting device, comprising a retaining bush (3) and a bolt (6), for structural members (2), for example window or door frames, which can be installed in a building aperture (1), wherein the retaining bush is provided in the form of a retaining bush (3) which can be adjusted by means of screw-thread engagement with respect to the structural member (2) and which can bear against a boundary (4) of a building aperture (1), which retaining bush has a central bore (5) extending through its entire length, wherein the bolt can be inserted as a bolt (6), which can be screwed into a boundary (4) of the building aperture (1), into the central bore (5) in the retaining bush (3), **characterised in that** the bolt (6) is formed with a tool engagement means (18), with a drilling section (19) and a threadless shank (21).

2. An adjusting device according to Claim 1, **characterised in that** the bolt (6) is designed to fit axially displaceably with respect to the bore (5) in the retaining bush (3).

3. An adjusting device according to Claim 1 or 2, **characterised in that** on the shank portion adjacent the drilling section (19) the bolt (6) is provided with roughened portions, knurling (22) or the like for increasing the friction in the drilled hole.

## Revendications

1. Dispositif d'ajustage formé d'une cheville (3) et d'une vis (6) pour des organes de construction (2) à intégrer dans une ouverture de construction (1) comme par exemple un châssis de fenêtre ou de porte, la cheville étant une cheville (3) qui s'appuie, par l'intermédiaire d'une prise par filetage, réglable par rapport à la construction (2), contre une limitation (4) d'une ouverture de construction (1),
cette cheville ayant un perçage central (5) traversant toute sa longueur, et le perçage central (5) recevant dans la cheville (3) la vis servant de vis (6) pouvant se visser dans une partie de limitation (4) de l'ouverture (1) de la construction,
**caractérisé en ce que**
la vis (6) comporte un moyen de prise (18) pour un outil, un segment perforateur (19) et une partie de tige sans filetage (21).

2. Dispositif d'ajustage selon la revendication 1,
**caractérisé en ce que**
la vis (6) est coulissante de manière adaptée axialement par rapport au perçage (5) dans la cheville (3).

3. Dispositif d'ajustage selon l'une quelconque des revendications 1 ou 2,
**caractérisé en ce que**
sur la partie de tige adjacente au segment perforateur (19), la vis (6) comporte des rugosités, une partie moletée (22) ou analogue, pour augmenter son frottement dans le perçage.
